# EUROPEAN PATENT APPLICATION

(11) **EP 4 535 266 A1**
(43) Date of publication of application: **09.04.2025**
(21) Application number: 23315379.0
(22) Date of filing: 05.10.2023
(51) Int. Cl.: G06Q 20/22, G06Q 20/42

(54) **METHOD FOR AUTHORIZING A MONETARY TRANSACTION**

(71) Applicant: THALES DIS FRANCE SAS, 92190 Meudon (FR)
(72) Inventor: Yang, Wujun, 544895 SINGAPORE (SG); Wong, Peter, 142052 SINGAPORE (SG); Tibuludji, Redi, 510777 SINGAPORE (SG); Nataniel, Anthony, 122311 SINGAPORE (SG)
(74) Representative: Grevin, Emmanuel

(57) **Abstract**

The invention is a method for authorizing a payment transaction involving a payment instrument (10) assigned to a first user (41) and issued by an issuing bank (50).

During the payment transaction, a server (55) of the issuing bank receives transaction parameters (71).

Upon receipt of the parameters, the server sends a decision request (72) comprising the parameters to a guardian device (30) assigned to a second user (42).

The guardian device provides the parameters to the second user, determines an approval or a refusal of the second user for the payment transaction then sends to the server a decision response (73) reflecting the approval or refusal.

The server generates a decision message (74) either authorizing the payment transaction to continue only in case of approval or refusing the payment transaction only in case of refusal; then send it to a payment terminal coupled to the payment instrument.

## Description

### (Field of the invention)

The present invention relates to methods for authorizing monetary transactions. It relates particularly to methods for authorizing monetary transactions involving a smart card coupled to a payment terminal.

### (Background of the invention)

Parents would like their children to have a payment card to pay for their daily needs which is more convenient and secure compared to using cash. However, they would also like to be able to restrict or review what they are purchasing. That is why existing solutions rely on a whitelist of merchants (I.e., list of authorized merchants) that can be automatically controlled when a payment transaction is started with a Point-Of-Sale (POS) terminal.

The document WO2020208262A1 parental control of transaction in which a decision maker defines a list of prohibited/authorized payment transactions.

### (Summary of the Invention)

However, a child may want to make a reasonable purchase in a store that is not registered in the predefined whitelist.

There is a need to propose way to allow a child to make a payment with an unlisted merchant.

The invention aims at solving the above-mentioned technical problem.

An object of the present invention is a method for authorizing a payment transaction involving a payment terminal coupled to a payment instrument assigned to a first user. The payment instrument has been issued by an issuing bank. The method comprises:
- During the payment transaction,' receiving, by a server of the issuing bank, parameters of the payment transaction.
- Upon receipt of said parameters, sending, by the server a decision request to a guardian device previously allocated to the payment instrument, the decision request comprising said parameters. The guardian device is assigned to a second user different from the first user.
- Responsive to the decision request, providing the parameters to the second user and determining by the guardian device an approval or a refusal of the second ' user for the payment transaction.
- Then, sending by the guardian device to the server a decision response reflecting said approval or refusal of the second user.
- Responsive to the receipt of the decision response, generating by the server a decision message either authorizing the payment transaction to continue only in case of approval or refusing the payment transaction only in case of refusal; then sending by the server the decision message to the payment terminal.

Advantageously, the parameters may comprise a transaction amount and a merchant name associated to the payment terminal, the guardian device may determine said approval or refusal by capturing an input data through a user interface after providing said transaction amount and merchant name to the second user.

Advantageously, the decision response may comprise a cryptogram computed by the guardian device and the server may generate the decision message only after a successful checking of the cryptogram.

Advantageously, the server and the payment terminal may exchange data through an acquirer bank server.

Advantageously, the method may comprise both an issuing phase and an enrollment phase before the payment transaction. During the issuing phase, the server may store both a first identifier of said first user and a second identifier of said second user into said payment instrument, then may issue said payment instrument; and
during the enrollment phase, the server may enroll the guardian device using said second identifier and may allocate the guardian device to the payment instrument.

Advantageously, during the enrollment phase,
- responsive to a registration request from the guardian device, the server may send an enrollment request to the guardian device,
- Upon authentication of the second user by the guardian device, the guardian device may generate and send to the issuing bank an enrollment response;
- Upon successful checking of the enrollment response, the server may store a link data reflecting allocation of the guardian device to the payment instrument.

Advantageously, the payment instrument may be a physical payment card, a digital payment card, a payment ring, a payment bracelet or a payment watch.

Another object of the present invention is a system for authorizing a payment transaction comprising a payment instrument assigned to a first user, a guardian device assigned to a second user different from the first user and a server of an issuing bank that issued said payment instrument. The payment transaction involves a payment terminal coupled to the payment instrument. During the payment transaction, the server is configured to receive parameters of the payment transaction. Upon receipt of said transaction parameters, the server is configured to send a decision request to the guardian device previously allocated to the payment instrument, said decision request comprising said parameters. Responsive to the decision request, the guardian device is configured to provide said parameters to the second user then to determine an approval or a refusal of the second user for the payment transaction using said parameters. Then, the guardian device is configured to send to the server a decision response reflecting said approval or refusal of the second user. Responsive to the receipt of the decision response, the server is configured to generate a decision message either authorizing the payment transaction to continue only in case of approval or refusing the payment transaction only in case of refusal, then to send the decision message to the payment terminal.

Advantageously, the parameters may comprise a transaction amount and a merchant name associated to the payment terminal, the guardian device may be configured to determine said approval or refusal by capturing an input data through a user interface after providing said transaction amount and merchant name to the second user.

Advantageously, the decision response may comprise a cryptogram computed by the. guardian device and the server may be a hardware server configured to generate the decision message only after a successful checking of the cryptogram.

Advantageously, the server and the payment terminal may be configured to exchange data through an acquirer bank.

Advantageously, during the issuing phase before the payment transaction, the server may be configured to store both a first identifier of said first user and a second identifier of said second user into said payment instrument, then to issue said payment instrument; and
during the enrollment phase before the payment transaction, the server may be configured to enroll the guardian device using said second identifier and to allocate the guardian device to the payment instrument.

Advantageously, during the enrollment phase,
- responsive to a registration request from the guardian device, the server may be configured to send an enrollment request to the guardian device,
- Upon authentication of the second user by the guardian device, the guardian device may be configured to generate and send to the server an enrollment response; and
- Upon successful checking of the enrollment response, the server may be configured to store a link data reflecting allocation of the guardian device to the payment instrument.

Advantageously, the payment instrument may be a physical payment card, a digital payment card, a payment ring, a payment bracelet or a payment watch.

Advantageously, the guardian device may be a mobile phone, a communicating bracelet, communicating glasses or a communicating watch.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary architecture of a system for authorizing a monetary transaction that comprises a payment instrument, guardian device and a server of an issuing bank according to an example of the invention;
- Figure 2 shows an exemplary flow diagram for an issuing phase according to an example of the invention;
- Figure 3 shows an exemplary flow diagram for an enrollment phase according to an example of the invention; and
- Figure 4 shows an exemplary flow diagram for authorizing or rejecting a monetary transaction according to an example of the invention.

### (Detailed description of the preferred embodiments)

Smart cards are portable small devices comprising at least a memory, a microprocessor, and an operating system for computing treatments. They may comprise services applications like payment, access control, identity, or telecom applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of payment instrument intended to participate to a payment transaction with a payment terminal. For example, the payment instrument may be a credit card, a debit card, or a payment instrument hosted on a wearable device like a watch, a ring, or a bracelet.

Some embodiments of the invention may apply to any type of guardian device that can be paired to a payment instrument and able to provide data to and get decision of the user of the guardian device. The guardian device can be a portable appliance like a smartphone, a tablet, or a Personal Digital Assistant (PDA). The guardian device can be a wearable device like a communicating watch, communicating glasses, or a communicating bracelet for instance.

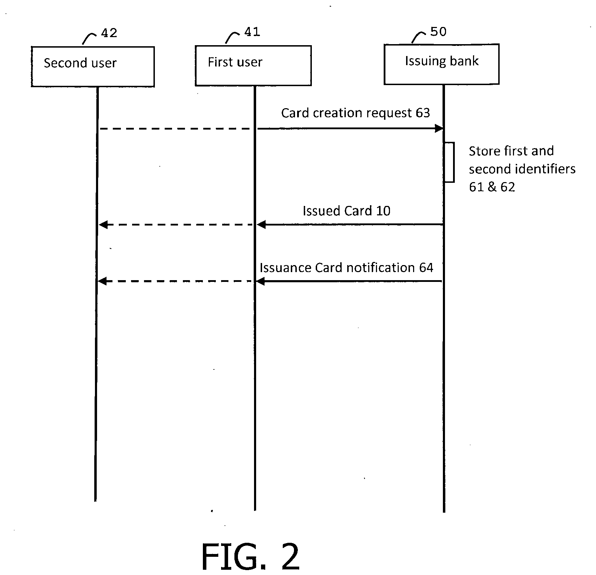

Figure 2 depicts an exemplary flow diagram for an issuing phase according to an example of the invention.

In this example, the payment instrument 10 is a banking card which may be implemented as a payment smart card, a credit card, or a debit card.

The first user 41 can be a child and the second user 42 can be a parent.

Either the child or the parent has a bank account opened with the issuing bank 50. Preferably, both have an account opened in the issuing bank.

During an issuing phase, the first user 41 can send a card creation request 63 to a .server of the issuing bank 50. The first user 41 can trigger sending of the request 63 of card creation from a computer machine or a phone for instance.

Alternatively, the card creation request 63 can be sent to the server 55 by the second user 42 (as shown with an arrow in dashed line) from a laptop or portable device like a smartphone.

The server is hardware computer comprising a set of program instructions designed to carry out all needed actions. The server can be a specialized server.

The card creation request comprises reference data allowing to identify both the first and second users.

Upon receipt of the card creation request, the server trigger the storage into the banking card of a pair comprising a first identifier 61 assigned to the first user and a second identifier 62 assigned to the second user. The banking card can be a pre-personalized card.

The server can store the same pair in its own memory.

Then the issuing bank 50 issues the banking card and provides it to the first issuer. Alternatively, the issuing bank can provide the banking card to the second user 42 (as shown with an arrow in dashed line).

In some embodiments, the server can send a notification of card issuance to the first issuer and/or to the second user 42 (as shown with an arrow in dashed line).

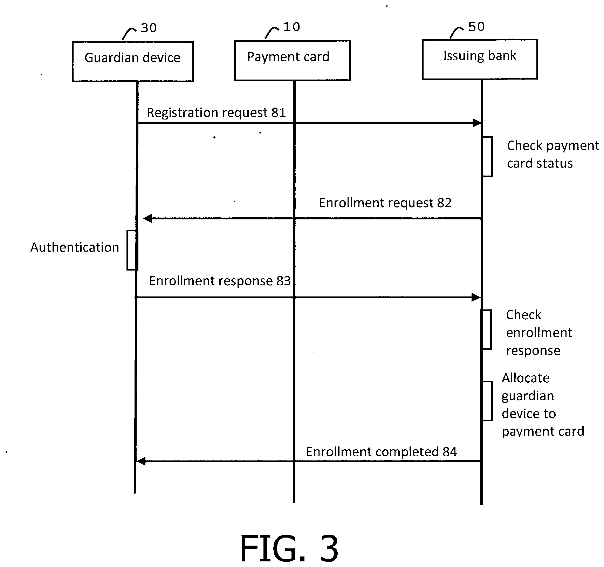

Figure 3 depicts an exemplary flow diagram for an enrollment phase according to an example of the invention.

In this example, the issuing phase described at Figure 2 is assumed to have been performed.

The guardian device 30 can be a smartphone, a tablet PC, or a Personal Digital Assistant (PDA) for instance.

During the enrollment phase, the guardian device 30 sends a registration request 81 to the server of the issuing bank 50.

The registration request 81 can comprise a reference of the guardian device 30 and of the payment card 10. Alternatively, the registration request 81 can comprise a reference of the first and second issuers.

Responsive to the registration request 81, the server can check the current status of the payment card 10. If enrollment is allowed (either due to a formal agreement signed by the second user 42 or to the fact that the card is still not allocated to a guardian device for instance), the server sends an enrollment request 82 to the guardian device 30. The enrollment request 82 aims at securely getting the agreement of the second user 42 related to the enrollment operation.

The guardian device can get the agreement of the second user by asking the second use to authenticate through any appropriate way: secret code or fingerprint for instance.

Upon authentication of the second user by the guardian device 30, the guardian device generates and sends to the server an enrollment response 83 comprising a secure data reflecting the result of the authentication of the second user.

The server can check the received secure data to control that the individual who authenticated on the guardian device is the one assigned to the second identifier 62 (I.e., is the second user).

Upon successful checking of the enrollment response 83 by the server, the server stores in its own memory a link data 66 reflecting allocation of the guardian device 30 to the banking card 10. Thus, the hardware computer of the issuing bank keeps a track of the allocation of the guardian device 30 to the banking card 10.

Then the server can send to the guardian device 30 a message 84 meaning that the enrollment is completed.

All data and messages exchanged between the server and the guardian device can be conveyed through a combination of conventional networks like Telecom networks, public (E.g., The Internet) and private networks.

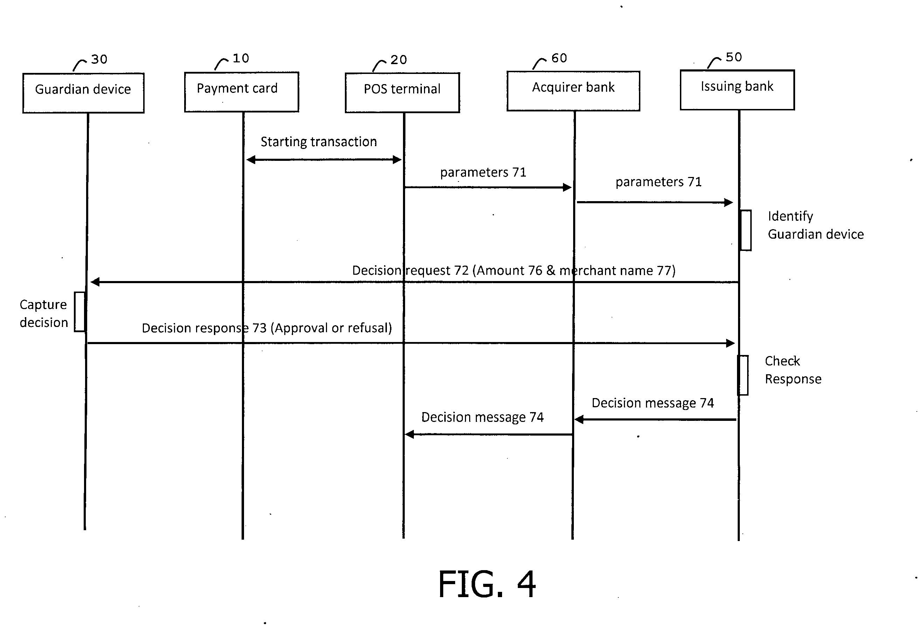

Figure 4 depicts an exemplary flow diagram for authorizing or rejecting a monetary transaction according to an example of the invention.

In this example, both the issuing phase and the enrollment phase are assumed to have been previously performed.

The child 41 (I.e., first user) may want to perform a monetary transaction with a payment terminal 20. The type of the terminal 20 may be a payment terminal like a hardware Point-Of-Sale terminal in a shop, or a payment Kiosk installed at the exit of a car park. Other types of terminals may encompass Automated Teller Machine (ATM, for a cash withdrawal) or softPOS (for a payment transaction). A softPOS corresponds to a software application emulating a POS terminal. A SoftPOS is generally hosted by a mobile phone or a tablet PC.

The payment transaction for a determined money amount 76 starts in a conventional way between the payment card 10 and the payment terminal 20. The cardholder (I.e., first user 41) may be requested to enter a PIN code on the keypad of the terminal 20. Depending on security rules, the cardholder can be exempted from entering a PIN code or the payment card may authenticate the first user thanks to a sensed fingerprint.

The payment terminal 20 sends to the acquirer bank 60 (I.e., to a hardware computer machine of the acquirer bank) a message comprising parameters 71 of the payment transaction. In turn, the acquirer bank 60 forwards the parameters 71 to the server 55 of the issuing bank 50. Sending of the parameters 71 can be performed using a conventional payment flow (I.e., through the set of messages specified by an existing payment scheme like EMV^{®}).

The parameters 71 can include the transaction amount 76, and the name 77 of the merchant to which the payment terminal is assigned. In addition, an identifier of the payment card 10 (which could be an identifier associated with the bank account corresponding to the card) is sent to the issuing bank along with the parameters 71.

Based on the received identifier of the payment card 10 and the link data 66 recorded during the enrollment phase, the server 55 identifies the guardian device 30.

Then the server 55 sends a decision request 72 to the guardian device. The decision request 72 comprises the parameters 71.

Responsive to the decision request 72, the guardian device 30 provides the received transaction parameters 71 to the second user, captures an input data 91 (reflecting the decision of the second user) through a user interface embedded in the guardian device.

Since both the transaction amount and the merchant's name are displayed/vocalized, the second user (e.g. parent) can make a decision to approve or deny the transaction. The guardian device determines the approval or refusal of the second user for the payment transaction.

Then, the guardian device sends to the server 55 a decision response 73 reflecting the approval or refusal of the pending transaction by the second user.

Responsive to the receipt of the decision response 73, the server 55 checks the decision of the second user and generates a decision message 74 either authorizing the payment transaction to continue only in case of approval by the second user or refusing the payment transaction only in case of refusal by the second user. Then, the server 55 sends the decision message 74 (via a conventional flow) to the payment terminal 20.

From this event, the terminal 20 can continue processing the payment transaction depending on the agreement or not received from the server 55 of the issuing bank.

In some embodiments, the payment terminal can exchange messages and data with the server 55 without going through the acquirer bank.

In some embodiments, the guardian device can generate a decision response 73 comprising a cryptogram computed by the guardian device and the server 55 can generate the decision message 74 only after a successful checking of the cryptogram received through the decision response 73.

It should be noted that the guardian device 30 is distinct from the payment instrument 10 and the first user (e.g. child) is different from the second user (e.g. mother or father).

In some embodiments, the transaction parameters 71 can comprise the place where the payment terminal is located and/or the type of good or service which is purchased.

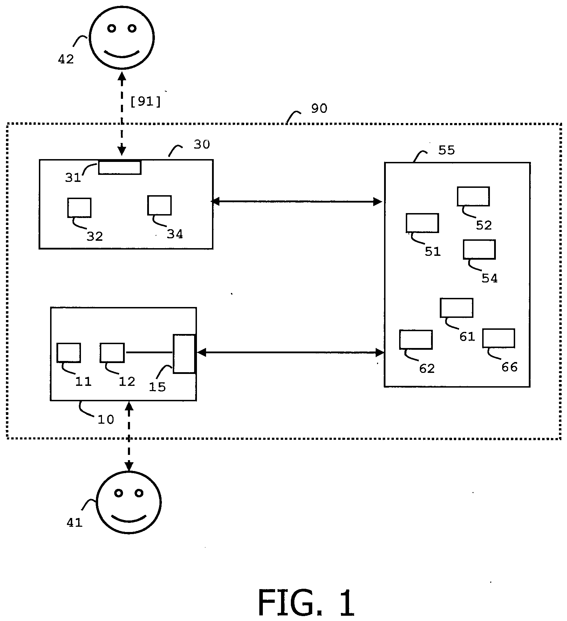

Figure 1 depicts an exemplary architecture of a system 90 for authorizing a monetary transaction that comprises a payment instrument 10, guardian device 30 and a server 55 of an issuing bank 50 according to an example of the invention.

The payment instrument 10 is assigned to a first user 41, and the guardian device 30 is assigned to a second user 42 different from the first user. An issuing bank 50 has issued the payment instrument which can be a banking smart card for instance.

The payment instrument 10 can be a payment card comprising a conventional physical communication interface 15 designed to exchange data with a payment terminal in contact or contactless mode. The smart card 10 comprises a hardware computing unit 12 and a non-volatile memory storing a. set of program instructions which provide feature of the card operating system when executed by the hardware computing unit. The smart card 10 comprises a software payment application 11 intended to be executed by hardware computing unit.

The guardian device 30 can embed a user input interface 31 allowing to capture data provided by the user 42 of the guardian device. For example, the user input interface 31 may include a keyboard, a microphone, a motion sensor, a camera or a biometric sensor. In some embodiments, the guardian device 30 may be a mobile phone, a tablet PC, a Personal Digital Assistant (PDA) or a wearable device like a watch, or a bracelet.

The guardian device 30 comprises a guardian application 32 configured to receive from the server 55 of the issuing bank 50 a decision request 72 comprising transaction parameters 71.

Responsive to the decision request 72 originated from the server 55, the guardian application 32 is configured to provide (by audio or display) the received transaction parameters to the second user, then to determine an approval or a refusal of the second user for the payment transaction.

The guardian application 32 is configured to build a decision response 73 reflecting the approval or refusal of the second user for the payment transaction and to send the decision response 73 to the server 55.

Preferably, the guardian application 32 is a software application including a cryptographic algorithm and a key to secure messages exchanged with the server 55.

The server 55 comprises a manager application 51 configured to receive transaction parameters 71 of the payment transaction sent by a payment terminal during a payment transaction involving the payment terminal coupled to the payment instrument 10.

Upon receipt of the parameters 71, the manager application 51 is configured to generate and send a decision request 72 to the guardian device 30 previously allocated to the payment instrument 10. The manager application 51 can read the link data 66 to identify the relevant guardian device associated to the payment instrument 10. The decision request comprises the transaction parameters 71.

Responsive to the receipt of the decision response 73, the manager application 51 is configured to generate a decision message 74 either authorizing the payment transaction to continue only in case of approval or refusing the payment transaction only in case of refusal; then to send the decision message to the payment terminal.

In some embodiments, the decision response 73 can comprise a cryptogram computed by the guardian application 32 and the manager application 51 can be configured to generate the decision message 74 only after a successful checking of the cryptogram.

In some embodiments, the decision response 73 can comprise a cryptogram computed by the guardian application 32 and the manager application 51 can be configured to generate the decision message 74 reflecting the refusal of the second user for the payment transaction if the checking of the cryptogram is unsuccessful.

In some embodiments, during an issuing phase before the payment transaction, the server 55 can comprise an issuing application 52 configured to store both a first identifier 61 of the first user and a second identifier 62 of the second user into the payment instrument 10.

In some embodiments, during an enrollment phase (taking place after the issuing phase and before the payment transaction), the server 55 can comprise an enrolling application 54 configured to send an enrollment request 82 to the guardian device 30 responsive to a registration request 81 received from the guardian device. Upon authentication of the second user by the guardian device 30, the guardian device can comprise an enrollment application 34 configured to generate and send to the server an enrollment response 83. Upon successful checking of the enrollment response, the enrolling application 54 can be configured to store a link data 66 reflecting allocation of the guardian device 30 to the payment instrument 10.

The link data 66 may include an identifier of the guardian device and an identifier of payment instrument. Each of the identifiers can be a serial number, a name or any unique data assigned to either the guardian device or the payment instrument.

The invention is not limited to the described embodiments or examples. In particular, the described examples and embodiments may be combined. A guardian device may be allocated to a plurality of payment instruments.

Some embodiments of the invention are well designed for controlling authorization of payment transactions or cash withdrawals initiated by a person under guardianship or curatorship.

Some embodiments of the invention allow the user of the guardian device to check on-the-fly important transaction parameters like the amount and the merchant's name before authorizing the pending transaction.

An advantage of some embodiments of the invention, is to allow the user of the guardian device to accept a transaction for a given merchant one time only, without permanently approving all transactions performed with the given merchant as would be the case if the given merchant was registered in a whitelist.

An additional advantage of some embodiments of the invention, is to allow the user of the guardian device to detect and defeat attack attempts. If a transaction attempt occurs at an unusual time (e.g. between 2 a.m. and 4 a.m. for a child or if the child is supposed to be at school), the user of the guardian device can suspect the transaction was initiated without child's knowledge. Such a case may occur when the payment instrument is lost or stolen.

An advantage of some embodiments of the invention, is to remain compliant with the usual flow of the payment messages exchanged between a payment instrument and a payment terminal. Thus, the existing park of payment terminals and ATM can be kept unchanged.

## Claims

1. A method for authorizing a payment transaction involving a payment terminal (20) coupled to a payment instrument (10) assigned to a first user (41); said payment instrument being issued by an issuing bank (50);
**characterized in that** the method comprises:
- During the payment transaction, receiving, by a server (55) of the issuing bank (50), parameters (71) of said payment transaction;
- Upon receipt of said parameters (71), sending, by the server (55) a decision request (72) to a guardian device (30) previously allocated to the payment instrument, said decision request comprising said parameters (71); said guardian device being assigned to a second user (42) different from the first user;
- responsive to said decision request, providing said parameters to the second user and determining by the guardian device an approval or a refusal of the second user for the payment transaction;
- then, sending by the guardian device to the server (55) a decision response (73) reflecting said approval or refusal of the second user;
- responsive to the receipt of the decision response, generating by the server (55) a decision message (74) either authorizing the payment transaction to continue only in case of approval or refusing the payment transaction only in case of refusal; then sending by the server the decision message to the payment terminal.

2. The method according to claim 1, wherein the parameters (71) comprise a transaction amount (76) and a merchant name (77) associated to the payment terminal, wherein the guardian device determines said approval or refusal by capturing an input data (91) through a user interface (31) after providing said transaction amount and merchant name to the second user.

3. The method according to claim 1, wherein the decision response (73) comprises a cryptogram computed by the guardian device and wherein the server (55) generates the decision message (74) only after a successful checking of the cryptogram.

4. The method according to claim 1, wherein the server (55) and the payment terminal exchange data through an acquirer bank (60).

5. The method according to claim 1, wherein the method comprises both an issuing phase and an enrollment phase before the payment transaction;
wherein during the issuing phase, the server (55) stores both a first identifier (61) of said first user and a second identifier (62) of said second user into said payment instrument (10), then issues said payment instrument; and
wherein during the enrollment phase, the server (55) enrolls the guardian device using said second identifier (62) and allocates the guardian device to the payment instrument (10).

6. The method according to claim 5, wherein during the enrollment phase,
- responsive to a registration request (81) from the guardian device, the server (55) sends an enrollment request (82) to the guardian device (30),
- Upon authentication of the second user by the guardian device (30), the guardian device generates and sends to the issuing bank an enrollment response (83);
- Upon successful checking of the enrollment response, the server (55) stores a link data reflecting allocation of the guardian device to the payment instrument.

7. The method according to claim 1, wherein the payment instrument (10) is a physical payment card, a digital payment card, a payment ring, a payment bracelet or a payment watch.

8. A system (90) for authorizing a payment transaction comprising a payment instrument (10) assigned to a first user (41), a guardian device (30) assigned to a second user (42) different from the first user and a server (55) of an issuing bank (50) that issued said payment instrument, said payment transaction involving a payment terminal (20) coupled to the payment instrument;
**characterized in that**:
- during the payment transaction, the server (55) is configured to receive parameters (71) of said payment transaction;
- upon receipt of said parameters (71), the server is configured to send a decision request (72) to the guardian device (30) previously allocated to the payment instrument (10), said decision request comprising said parameters (71);
- responsive to said decision request, the guardian device (30) is configured to provide said parameters to the second user then to determine an approval or a refusal of the second user for the payment transaction using said parameters;
- then, the guardian device is configured to send to the server (55) a decision response (73) reflecting said approval or refusal of the second user;
- responsive to the receipt of the decision response, the server (55) is configured to generate a decision message (74) either authorizing the payment transaction to continue only in case of approval or refusing the payment transaction only in case of refusal; then to send the decision message to the payment terminal.

9. The system according to claim 8, wherein the parameters (71) comprise a transaction amount (76) and a merchant name (77) associated to the payment terminal, wherein the guardian device is configured to determine said approval or refusal by capturing an input data (91) through a user interface (31) after providing said transaction amount and merchant, name to the second user.

10. The system according to claim 8, wherein the decision response (73) comprises a cryptogram computed by the guardian device and wherein the server (55) is a hardware server configured to generate the decision message (74) only after a successful checking of the cryptogram.

11. The system according to claim 8, wherein the server (55) and the payment terminal are configured to exchange data through an acquirer bank (60).

12. The system according to claim 8, wherein during the issuing phase before the payment transaction, the server (55) is configured to store both a first identifier (61) of said first user and a second identifier (62) of said second user into said payment instrument (10), then to issue said payment instrument; and
wherein during the enrollment phase before the payment transaction, the server (55) is configured to enroll the guardian device using said second identifier (62) and to allocate the guardian device to the payment instrument (10).

13. The system according to claim 13, wherein during the enrollment phase,
- responsive to a registration request (81) from the guardian device, the server (55) is configured to send an enrollment request (82) to the guardian device (30),
- Upon authentication of the second user by the guardian device (30), the guardian device is configured to generate and send to the server an enrollment response (83); and
- Upon successful checking of the enrollment response, the server (55) is configured to store a link data reflecting allocation of the guardian device to the payment instrument.

14. The system according to claim 8, wherein the payment instrument (10) is a physical payment card, a digital payment card, a payment ring, a payment bracelet or a payment watch.

15. The system according to claim 1, wherein the guardian device is a mobile phone, a communicating bracelet, communicating glasses or a communicating watch.
